Europäisches Patentamt

European Patent Office

Office européen des brevets

(19)

(11) Veröffentlichungsnummer: **0 196 421**
**B1**

(12) # EUROPÄISCHE PATENTSCHRIFT

(45) Veröffentlichungstag der Patentschrift:
12.10.88

(21) Anmeldenummer: 86101394.4

(22) Anmeldetag: 04.02.86

(51) Int. Cl.⁴: **F 02 D 41/38,** F 02 D 35/00,
F 01 N 3/02

(54) Verfahren zum Regenerieren von Russfiltern bei Diesel-Brennkraftmaschinen.

(30) Priorität: 04.04.85 DE 3512362

(43) Veröffentlichungstag der Anmeldung:
08.10.86 Patentblatt 86/41

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
DE-A-3 408 057
GB-A-2 134 006
US-A-4 492 079

PATENTS ABSTRACTS OF JAPAN, Band 8, Nr. 284
(M-348) 1721 , 26. Dezember 1984; & JP - A - 59 150 921
(TOYOTA JIDOSHA K.K.) 29-08-1984
PATENTS ABSTRACTS OF JAPAN, Band 9, Nr. 3 (M-
349) 1726 , 9. Januar 1985; & JP - A - 59 153 913
(NISSAN JIDOSHA K.K.) 01-09-1984

(73) Patentinhaber: ZEUNA- STÄRKER GMBH & CO KG,
Äussere Uferstrasse 61- 69 Postfach 102669,
D-8900 Augsburg 1 (DE)

(72) Erfinder: Santiago, Enrique, Adalbert Stifter
Strasse 6, D-8901 Diedorf (DE)
Erfinder: Kugland, Peter, Dipl.- Ing., Dr. Wilhelm
Lohmeier Strasse 2, D-8904 Friedberg (DE)
Erfinder: Ullmer, Alois, Dipl.- Ing., Wastl- Witt
Strasse 44, D-8000 München 21 (DE)

(74) Vertreter: Grättinger, Günter, Wittelsbacherstrasse
5 Postfach 16 49, D-8130 Starnberg (DE)

EP 0 196 421 B1

**Beschreibung**

Die Erfindung betrifft ein Verfahren zum systematischen Abbrennen von aus dem Abgasstrom einer Diesel-Brennkraftmaschine (Dieselmotor) in einen Filter gebildeten und gesammelten Feststoffteilchen (Ruß), wobei eine in der Ansaugleitung für die Verbrennungsluft vorgesehene Drosselklappe unter anderem abhängig von dem in der Abgasleitung vor den Filter gemessenen Gegendruck bei stehender Arbeitsmaschine betätigt wird.

Bei einem bekannten System zum Regenerieren eines Rußfilters (EP-A1-103 84) wird eine Drosselklappe in der Ansaugluftleitung derart gesteuert, daß in bestimmten Betriebszuständen durch Schließen der Drosselklappe und damit verbundener Reduzierung der Luftzufuhr die Abgastemperatur ansteigt mit der Folge, daß in einem in der Abgasleitung vorgesehenen Rußfilter die Zündtemperatur des dort abgelagerten Rußes erreicht wird. Durch Aufrechterhaltung dieses Zustands während einiger Minuten gelingt es, das Rußfilter vollständig zu regenerieren. Voraussetzung dabei ist, daß der Motor während des Regeneriervorgangs im oberen Teillastbereich gefahren wird, was bei einem Fahrzeugantrieb entweder eine hohe Geschwindigkeit oder Überwinden einer Steigung bedeutet.

Im unteren Teillastbereich des Motors hingegen kann die erforderliche Zündtemperatur im Abgas nur mittels einer zusätzlichen Aufheizvorrichtung erreicht werden.

Die Drosselklappenstellung wird bei dem bekannten Regenerierungssystem zwischen zwei Endstellungen gesteuert über einen Mikrocomputer, dessen Eingangssignale folgenden Meßgrößen entsprechen: Gaspedalstellung, Motordrehzahl, Abgastemperatur vor dem Rußfilter, Temperatur im Inneren des Rußfilters. Der Regeneriervorgang kann dabei automatisch oder von Hand initiiert werden. Durch eine variable Steuerung der Drosselklappe unter Berücksichtigung der genannten Meßgrößen soll erreicht werden, daß zum Schutz des Rußfilters die Filtertemperatur einen bestimmten Höchstwert nicht überschreitet und daß stets ein geringer Sauerstoffüberschuß im Abgas zur Unterdrückung von Rauch während des Abbrennens des im Rußfilter angesammelten Rußes vorhanden ist.

Bei einem weiteren bekannten Verfahren zum Abbrennen von in Filtern gesammelten Rußteilchen (GB-A-2 134 006) wird der Druck vor dem Filter als Maß für die Partikelbeladung des Filters verwendet. Sofern der Gegendruck vor dem Filter den oberen Grenzdruck überschreitet und gleichzeitig die Abgastemperatur nach dem Filter einen ersten Temperaturwert (250°C) überschreitet, wird ein Signal erzeugt, wodurch die Drosselklappe im Ansaugrohr drosselnd betätigt wird. Die Drosselklappe wird entweder geöffnet, sobald die Temperatur des Filters einen vorgegebenen zweiten Temperaturwert (600°C) überschreitet oder nach Ablauf einer vorgegebenen Zeit (y), sofern der vorgegebene zweite Temperaturwert (600°C) nicht erreicht wurde.

Bei einem weiteren bekannten Verfahren (US-A-4 492 079) zu dem gleichen Zweck wird mit Hilfe zweier Druckmeßglieder, die vor und nach dem Filter angeordnet sind, die Partikelbeladung des Filters ermittelt. Wenn die auf den Druck nach dem Filter bezogene Differenz der Drücke vor und nach dem Filter einen vorgegebenen Wert überschreitet, so wird während des fortgesetzten Betriebes des Dieselmotors die Drosselklappe drosselnd betätigt, solange, bis die ermittelte bezogene Druckdifferenz einen zweiten vorgegebenen, unteren Grenzdruck unterschreitet. Bei diesem Verfahren wird die Abgastemperatur nicht zur Regelung verwendet.

Die vorliegenden Regenerierungsverfahren beziehen sich auf Fahrzeuge, die ständig wechselnden Betriebsbedingungen unterliegen. Für die in diesen Fahrzeugen verwendeten Motoren sind demgemäß die bekannten, aufwendigen Regenerierungssysteme unerläßlich.

Demgegenüber liegt der vorliegenden Erfindung die Aufgabe zugrunde ein Verfahren zur Reinigung von Rußfiltern bei Dieselmotoren für den Antrieb von Arbeitsmaschinen wie Gabelstaplern od. dgl. zu schaffen, bei deren Normalbetrieb die für den Rußabbrand erforderlichen hohen Abgastemperaturen nicht erreicht werden.

Der erfindungsgemäße Lösungsvorschlag geht dabei aus von der Erkenntnis, daß derartige Arbeitsmaschinen möglicherweise im Schichtbetrieb gefahren werden, so daß es in der Regel ausreicht, wenn das Rußfilter nach jeder Schicht gereinigt wird und daß dabei der Reinigungsvorgang bevorzugt bei stehender Arbeitsmaschine erfolgen kann. Ein derartiges Verfahren zur Regeneration des Rußfilters ist in Patentanspruch 1 gekennzeichnet.

In Schritt 1 wird im Leerlaufbetrieb also bei einer Drehzahl von beispielsweise 800 U/min, der Gegendruck PVF des beladenen Rußfilters gemessen und mit einem oberen Grenzdruck PG1, z. B. von 80 mbar verglichen. Wird dieser Druck überschritten, so ist das Rußfilter beladen, d.h. Regeneration erforderlich. Die Leerlaufbedingungen erlauben auf einfache Weise das Erreichen einer definierten Ausgangsposition.

In Schritt 2 wird für PVF > PG1 ein erstes Signal erzeugt, worauf der Dieselmotor im oberen Teillastbereich, d.h. nahe Vollast gefahren wird, z. B. gegen die Fahrzeugbremse oder die Fahrzeughydraulik, wobei die Hydraulikpumpe gegen einen Widerstand arbeitet.

In Schritt 3 wird während des fortgesetzten Lastbetriebes die Abgastemperatur nach dem Filter (TNF) gemessen und mit einem vorgegebenen ersten Temperaturwert (TG1), z. B.

ca. 450°C verglichen. Es kann jedoch auch die Differenz (TVF - TNF) der Temperaturen vor dem Rußfilter (TVF) und nach dem Rußfilter (TNF) ermittelt werden. Diese bei hoher Teillast des Dieselmotors mit ansteigender Abgastemperatur (nach Filter) TNF bei Vollast des Dieselmotors abnehmende Temperaturdifferenz wird dann verglichen mit einem Temperaturwert, welcher einer vorgegebenen ersten Temperaturdifferenz DT1, z. B. in der Größenordnung von 90°C entspricht. Übersteigt die Abgastemperatur (TNF) den ersten Temperaturwert (TG1), bzw. ist die Differenz der gemessenen Abgastemperaturen (TVF - TNF) < DT1 , so wird in Schritt 4 ein zweites Signal erzeugt als Voraussetzung dafür, daß jetzt die Drosselklappe gegen einen Anschlag geschlossen wird. Durch den Anschlag wird eine bestimmte Drosselklappenstellung bei entsprechender Querschnittsverengung bzw. Durchsatzreduzierung definiert. Anstelle eines festen Anschlages kann diese Drosselklappenstellung (Drosselklappe geschlossen) auch variabel gesteuert werden, bevorzugt so, daß bei fortgesetztem Betrieb im oberen Teillastbereich (z. B. Vollgas bei vorgegebener Belastung) die Temperatur TVF vor dem Filter eine vorgegebene obere Grenztemperatur zum Schutze des Rußfilters nicht überschreitet.

In Schritt 5 ist also wesentlich, daß die Belastung des Dieselmotors im oberen Teillastbereich aufrechterhalten wird; durch die Drosselung der Luftzufuhr, also bei höherem Treibstoffanteil ergibt sich ein erneuter starker Temperaturanstieg im Rußfilter, mit welchem die Rußverbrennung eingeleitet wird. In Schritt 5 wird dieser Zustand solange aufrechterhalten bis der Gegendruck PVF des Rußfilters in Schritt 6 einen unteren Grenzdruck PG2 unterschreitet, dessen Wert z. B. bei 100 - 150 mbar liegt. Ist dies der Fall, so ist das Rußfilter von Ruß befreit, mit dem Ergebnis, daß ein drittes Signal erzeugt wird, worauf die Drosselklappe wieder geöffnet und der Dieselmotor entlastet wird.

Um zu vermeiden daß in dieser Phase, also kurz nach Beendigung der Regeneration das Rußfilter überhitzt wird, ist zweckmäßigerweise vorgesehen, den entlasteten Motor noch solange auf Vollgas zu fahren, bis die Abgastemperatur nach dem Filter TNF in Folge des hohen Luftanteils unter einen vorgegebenen zweiten Temperaturwert TG2 von z. B. 670°C absinkt. Erst dann wird ein viertes und letztes Signal erzeugt, welches das Ende der Regeneration anzeigt, d.h. der Dieselmotor kann bei entladenem Rußfilter wieder im Normalbetrieb gefahren werden.

Zur Sicherung des Rußfilters gegen Überhitzen infolge Sauerstoffzutritts bei Ende der Regeneration kann als weitere Maßnahme vor Erzeugung des dritten Signals (Entdrosseln) noch ein Temperaturvergleich vorgesehen sein nach der Beziehung TNF - TVF < DT2; letztere ist eine vorgegebene zweite Temperaturdifferenz) in der Größenordnung von z. B. 50°C. Erst wenn dieser Wert erreicht bzw. unterschritten ist, ist der Ruß weitgehend verbrannt, d.h. die Temperatur TNF nach dem Filter ist deutlich gesunken und die erhöhte Luftzufuhr beim Entdrosseln kann dem Rußfilter nicht mehr schaden.

Anstelle der vier Signale eines Steuersystems zur automatischen Regeneration können entsprechende Anzeigevorrichtungen, bevorzugt Signallämpchen betätigt werden, die dem Fahrer ein Auslösen des jeweils nächsten Verfahrensschritts auch von Hand ermöglichen. Dabei genügen zwei Lämpchen, welche durch die ersten beiden Signale in Leuchtzustand versetzt und durch das dritte und vierte Signal wieder gelöscht werden.

Am erfindungsgemäßen Verfahren ist besonders wesentlich die zweistufige Systemsteuerung, wobei in der ersten Stufe ein erster Temperaturanstieg bis zu einer Temperatur TVF vor Filter von z. B. 480°C unter Last bei offener Drosselklappe und ein zweiter Temperaturanstieg bis zu einer Temperatur TVF vor Filter von z. B. 660°C-durch Aufrechterhaltung des Lastbetriebs bei geschlossener Drosselklappe erzeugt wird. Ohne eine derartige Stufenregelung würde die Temperatur im Rußfilter zu schnell und zu hoch ansteigen mit der Gefahr daß das Rußfilter dabei zerstört wird.

Bei der erfindungsgemäßen zweistufigen Regeneration findet während des 1. Stufe noch kein Rußabbrand statt; das Rußfilter wird lediglich aufgeheizt, so daß während der 2. Stufe ein besonders gleichmäßiger Abbrand des Rußes erzielt wird. Hier ist besonders bemerkenswert die überraschend niedrige Temperaturspitze - die Temperatur TNF nach Filter steigt nur auf z. B. 800°C an - während bei einstufiger Regeneration (Drosselklappe von Anfang an geschlossen) Temperaturspitzen von über 1100°C die Regel sind. Nach dem erfindungsgemäßen Verfahren wird daher das Rußfilter geschont, d.h. eine hohe Lebensdauer erzielt.

Weitere Vorteile des erfindungsgemäßen Verfahrens sind eine hohe Beladung des Rußfilters, d.h. einer langen Zeitspanne zwischen zwei Regenerationsvorgänge sowie ein besonders hoher Regenerationsgrad Versuche mit einem Gabelstapler haben Regenerationsintervalle von bis zu 25 Betriebsstunden ergeben; dies bedeutet bei etwa 5 Betriebsstunden pro Tag eine einzige Regeneration pro Woche, also einen unerwartet niedrigen Wartungsaufwand.

Im folgenden wird das erfindungsgemäße Verfahren an Hand der Zeichnung erläutert. Es zeigt

Fig. 1 eine schematische Darstellung eines Dieselmotors mit Rußfilter und Steuergerät

Fig. 2 ein Flußdiagramm für die Funktion des Steuergeräts und

Fig. 3 eine qualitative Darstellung verschiedener Temperatur und Druckverläufe über der Regenerationszeit.

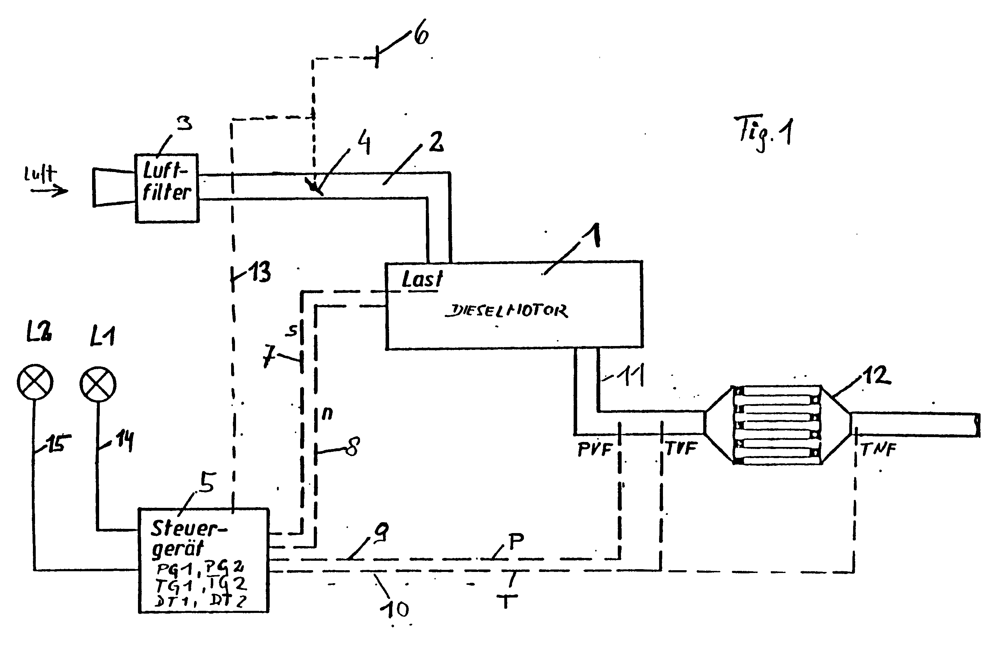

Gem. Fig. 1 ist ein Dieselmotor 1 über eine Ansaugleitung 2 mit einem Luftfilter 3 verbunden. In der Ansaugleitung 2 befindet sich eine Drosselklappe 4 welche entweder automatisch über ein Steuergerät 5 oder manuell über eine Betätigungseinrichtung 6, z. B. vom Fahrer eines (nicht Dargestellten) Arbeitsfahrzeugs, z. B. eines Gabelstablers, betätigbar ist.

Dementsprechend ist das Steuergerät 5 eingangsseitig verbunden mit den verschiedenen Meßgrößen, nämlich einem Signaleingang 7 für die Motorlast, z. B. analog der Gaspedalstellung, ferner einem Signaleingang 8 für die Motordrehzahl n, einem weiteren Signaleingang 9 für den Druck p in der Abgasleitung 11 vor dem darin eingeschalteten Rußfilter 12 und schließlich einem Signaleingang 10 für die Temperatur T des Abgasstroms vor dem Rußfilter 12. Die Ausgänge des Steuergeräts 5 umfassen eine erste (wahlweise) Signalleitung 13 zur Drosselklappe 4 und zwei weitere Signalleitungen 14, 15 zu den Kontrollampen L1 und L2.

Um die für die Regeneration des Rußfilters 12 erforderliche Abgastemperatur von mindestens 450° C im Rußfilter zu erreichen, wird während des Lastbetriebs des Dieselmotors die Drosselklappe 4 in der Ansaugleitung geschlossen entweder gesteuert über das Steuergerät 5 oder über eine manuelle Betätigungsvorrichtung 6. Bei manueller Betätigung orientiert sich der Fahrer an den Lichtsignalen der beiden Kontrollampen L1 und L2. Das Steuergerät 5 funktioniert in der Weise daß über einen Druckgeber vor dem Rußfilter 12 der Beladungszustand des Rußfilters ermittelt und mit einem vorgegebenen oberen Grenzdruck verglichen wird, nach der Beziehung PVF > PG1. Dieser Druckvergleich erfolgt im Leerlauf des Dieselmotors, d.h. n 800 U/min bzw. der Reglerstangenweg der Einspritzpumpe s = 0. Wenn der Gegendruck PVF größer als der obere Grenzdruck PG1 ist, dann wird eine Kontrollampe L1 "Rußfilter beladen" geschaltet (erstes Signal).

Danach wird der Motor vom Fahrer gegen die Fahrzeugbremse bzw. die Fahrzeughydraulik belastet und unter hoher Last bei Vollgas gefahren, um die Temperatur in der Abgasleitung 11 anzuheben. Erst wenn die dort nach dem Rußfilter 12 gemessene Temperatur TNF einen ersten vorgegebenen Grenzwert TG1 überschreitet wird die Kontrollampe L2.

"Drosseln" geschaltet (zweites Signal). Erst jetzt wird die Drosselklappe 4 geschlossen, wobei sie in der Schließstellung gegen einen (nicht gezeichneten) Anschlag anliegt. Der Dieselmotor 1 wird jetzt solange weiter unter Vollgas bei hoher Belastung gefahren bis im Rußfilter 12 die Regeneration einsetzt, während welcher der darin gesammelte Ruß abbrennt. Die Regeneration wird bei hoher Last und geschlossener Drosselklappe 4 solange fortgesetzt bis der Filtergegendruck PVF unter einen vorgegebenen unteren Grenzdruck PG2 absinkt, welcher für das gereinigte Rußfilter charakteristisch ist. Wenn dieser Fall eintritt erlöschen beide Kontrollampen L1, L2. Der Motor läuft lastlos im Leerlaufbetrieb weiter.

Zu diesen Funktionsablauf sind verschiedene Varianten denkbar z.b. kann der oben erläuterte Temperaturvergleich TNF > TG1 ersetzt werden durch einen Vergleich von Temperaturdifferenzen, indem die Temperaturen vor und nach dem Rußfilter 12 gemessen werden und nach der Beziehung

$$TVF - TNF < DT1$$

miteinander verglichen werden, wobei DT1 eine vorgegebene erste Temperaturdifferenz ist. Erst wenn diese Bedingung erfüllt ist leuchtet die Kontrollampe L2 auf.

Schließlich kann das Erlöschen der beiden Kontrollampen L1, L2 unabhängig voneinander gesteuert werden, und zwar jeweils erst nach einem vorangehenden Temperaturvergleich. Vor dem Erlöschen der Kontrollampe L2 für "Drosseln" erfolgt zweckmäßig ein Temperaturvergleich nach der Beziehung

$$TNF - TVF < DT2,$$

wobei DT2 eine vorgegebene zweite Temperaturdifferenz ist.

Nach dem Erlöschen der Kontrollampe L2 (drittes Signal) läuft der Motor lastlos bei Vollgas weiter. Das Erlöschen der Kontrollampe L1 für das Ende der Regeneration kann abhängig gemacht werden von einem Temperaturvergleich nach der Beziehung

$$TNF < TG2,$$

wobei TG2 ein zweiter vorgegebener Temperaturwert ist.

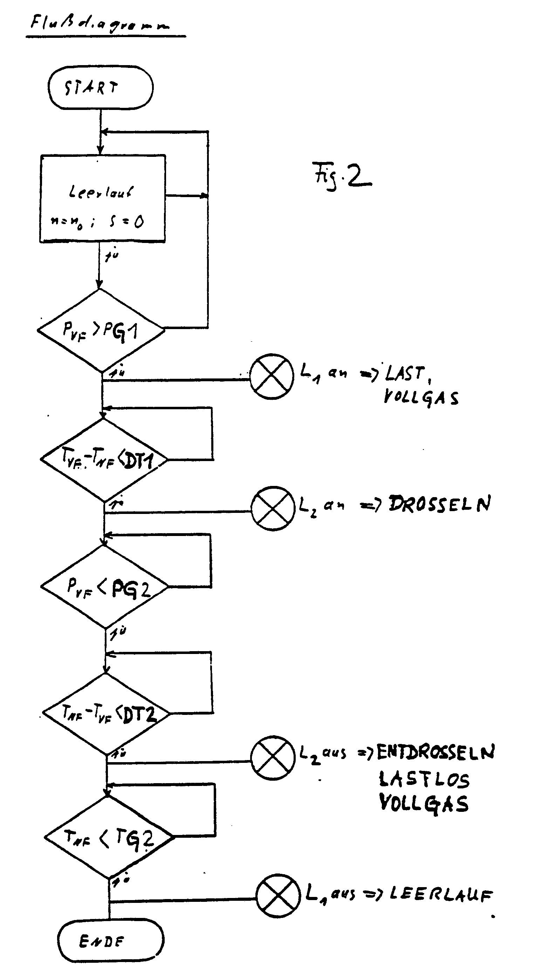

Nach dem Erlöschen der Kontrollampe L1 (viertes Signal) wird der Motor auf Leelaufbetrieb geschaltet. Das in Fig. 2 dargestellte Flußdiagramm erläutert beispielsweise die Funktionsweise des Steuergeräts.

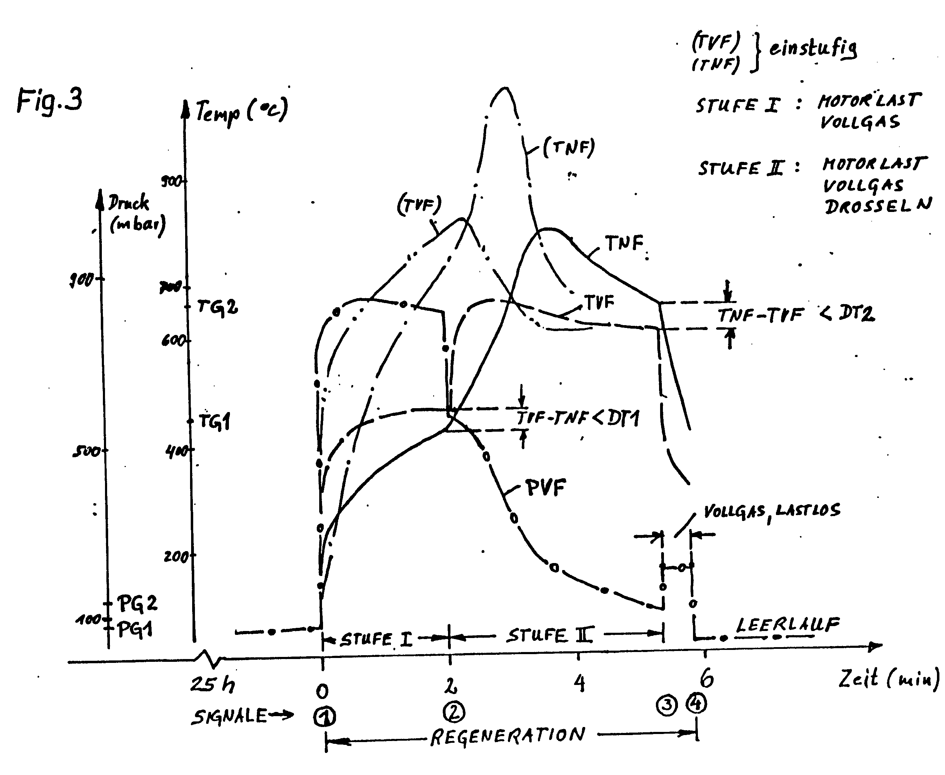

Die in Fig. 3 dargestellten Kurvenverläufe TVF, TNF, PVF über die Regenerationszeit zeigen deutlich die zweistufige Verfahrenssteuerung. Innerhalb der Stufe I wird der Motor ohne Drosselbetätigung aber unter hoher Teillast gefahren; dabei steigt die Temperatur nach dem Rußfilter TNF auf ein Niveau von etwa 450° C an. Nach Betätigung der Drossel, nämlich im Bereich der Stufe II steigt die Temperatur vor Filter TVF steil an, etwa auf 650° C. Auf diesem Temperaturniveau spielt sich dann das Abbrennen des im Rußfilter angesammelten Rußes ab. Während dieses zweistufigen Vorgangs steigt die Temperatur nach dem Rußfilter TNF nahezu stetig an und erreicht im Bereich der zweiten Stufe II ein kurzzeitiges Maximum bei etwa 850° C (vgl. strichlierten Kurvenverlauf). Nach Erreichen der Druckuntergrenze PG2 wird die Drosselklappe wieder geöffnet und es kommt danach zu einem raschen Absinken der Temperaturen vor und nach dem Filter. Hier ist zu beachten, daß der TNF-Wert qualitativ etwa gleich verläuft mit der (nicht gemessenen) Temperatur im Inneren des Rußfilters. Würde man schon zu Beginn der Stufe I den Motor unter hoher Teillast bei geschlossener Drossel fahren so würden sich die strichpunktierten Temperaturverläufe (TVF) und (TNF) einstellen. Die Temperatur vor dem Filter (TVF) würde dabei zwar erheblich rascher auf ein Niveau ansteigen, welches der Zündungstemperatur des Rußes entspricht; gleichzeitig würde aber die Temperatur im Filter, wie sich aus dem Kurvenverlauf (TNF) ergibt, sehr rasch auf einen Wert über 1100° C ansteigen, was die Zerstörung des Filters zur Folge hätte. Fig. 3 zeigt somit anschaulich die wesentliche Wirkung des zweistufigen Regenerationsverfahrens, wie es hier für Arbeitsmaschinen, bei denen die Regeneration im Stand ablaufen kann, vorgeschlagen wird.

**Patentansprüche**

1. Verfahren zum systematischen Abbrennen von aus dem Abgasstrom einer Diesel-Brennkraftmaschine, wie z. B. eines Dieselmotores einer Arbeitsmaschine in einem Filter (12) gebildeten und gesammelten Feststoffteilchen (Ruß), wobei eine in der Ansaugleitung (2) für die Verbrennungsluft vorgesehene Drosselklappe (4) unter anderem abhängig von dem in der Abgasleitung (11) vor dem Filter (12) gemessenen Gegendruck (PVF) nach dem folgenden System bei stehender Arbeitsmaschine betätigt wird:

Der im Leerlaufbetrieb des Dieselmotors (1) gemessene Gegendruck (PVF) wird mit einem vorgegebenen oberen Grenzdruck (PG1) verglichen (Schritt 1).

Übersteigt der Gegendruck (PVF) den oberen Grenzdruck (PG1), so wird ein erstes Signal (PVF > PG1) erzeugt, worauf der Dieselmotor im oberen Teillastbetrieb gefahren wird (Schritt 2).

Während des fortgesetzten Lastbetriebs des Dieselmotors wird die Abgastemperatur nach dem Filter (TNF) gemessen und mit einem vorgegebenen ersten Temperaturwert (TG1) verglichen (Schritt 3).

Übersteigt die Abgastemperatur (TNF) den ersten Temperaturwert (TG1), so wird ein zweites Signal (TNF > TG1) erzeugt, worauf die Drosselklappe drosselnd betätigt wird (Schritt 4).

Bei weiter aufrechterhaltenem Betrieb des Dieselmotors (1) im oberen Teillastbereich wird erneut der Gegendruck (PVF) gemessen und mit einem vorgegebenen unteren Grenzdruck (PG2) verglichen (Schritt 5).

Unterschreitet der Gegendruck (PVF) den unteren Grenzdruck (PG2), so wird ein drittes Signal (PVF < PG2) erzeugt, worauf die Drosselklappe (4) wieder geöffnet und der Dieselmotor entlastet werden kann (Schritt 6).

2. Verfahren nach Anspruch 1, dadurch gekennzeichnet, daß (entsprechend dessen Schritt 3) die Abgastempemperatur als Differenz der Abgastemperaturen vor dem Filter (TVF) und nach dem Filter (TNF) ermittelt und mit einem Temperaturwert in Form einer vorgegebenen ersten Temperaturdifferenz (DT1) verglichen wird, nach der Beziehung

(TVF - TNF) < DT1

3. Verfahren nach Anspruch 2, dadurch gekennzeichnet, daß (gem. Anspruch 1, Schritt 6) das dritte Signal erst unter der weiteren Bedingung erzeugt wird, daß die Differenz der Abgastemperaturen (TNF - TVF) kleiner ist als eine vorgegebene zweite Temperaturdifferenz (DT2).

4. Verfahren nach einem der Ansprüche 1 bis 3, dadurch gekennzeichnet, daß (gem. Anspruch 1, Schritt 6) der entlastete Dieselmotor (1) noch solange auf Vollgas gefahren wird, bis die Abgastemperatur nach dem Filter (TNF) unter einen vorgegebenen zweiten Temperaturwert (TG2) absinkt.

5. Verfahren nach Anspruch 4, dadurch gekennzeichnet, daß nach dem Unterschreiten des zweiten Temperaturwerts (TG2) ein viertes Signal erzeugt wird, worauf der Dieselmotor (1) wieder im Normalbetrieb gefahren wird.

6. Verfahren nach einem der Ansprüche 1 bis 5, dadurch gekennzeichnet, daß eine oder mehrere Signale jeweils eine Anzeigevorrichtung (L1, L2) betätigen, die ein Auslösen des jeweils nächsten Verfahrensschritts auch von Hand ermöglichen.

**Claims**

1. Method for the systematic burning-off of solid particles (soot) formed and collected in a filter (12) from the exhaust gas stream of a diesel internal combustion engine, such as for example a diesel engine of a machine, in which case a throttle valve (4) provided in the suction pipe (2) for the combustion air is actuated inter alia depending on the counterpressure (PVF) measured in the exhaust gas pipe (11) in front of the filter (12), according to the following system, with the machine stationary:

The counterpressure (PVF) measured during idling of the diesel engine (1) is compared with a given upper limiting pressure (PG1) (step 1).

If the counterpressure (PVF) exceeds the upper limiting pressure (PG1), then a first signal (PVF > PG1) is produced, whereupon the diesel engine is run in the upper partial load operation (step 2).

During the continued load operation of the diesel engine, the exhaust gas temperature after the filter (TNF) is measured and compared with a given, first temperature value (TG1) (step 3).

If the exhaust gas temperature (TNF) exceeds the first temperature value (TG1), then a second signal (TNF > TG1 ) is produced, whereupon the throttle valve is actuated in a throttling manner (step 4).

If the operation of the diesel engine (1) is continued in the upper partial load range, the counterpressure (PVF) is again measured and compared with a given lower limiting pressure (PG2) (step 5).

If the counterpressure (PVF) falls short of the lower limiting pressure (PG2), then a third signal (PVF < PG2) is produced, whereupon the throttle valve (4) is again opened and the load on the diesel engine can be removed (step 6).

2. Method according to Claim 1, characterised in that (according to its step 3) the exhaust gas temperature is ascertained as the difference between the exhaust gas temperatures before the filter (TVF) and after the filter (TNF) and is compared with a temperature value in the form of a given, first temperature difference (DT1), according to the equation (TVF - TNF) < DT1.

3. Method according to Claim 2, characterised in that (according to Claim 1, step 6) the third signal is only produced under the further condition that the difference between the exhaust gas temperatures (TNF - TVF) is less than a given, second temperature difference (DT2).

4. Method according to one of Clams 1 to 3, characterised in that (according to Claim 1, step 6) the diesel engine (1) from which the load is removed is run at full power until the exhaust gas temperature after the filter (TNF) drops below a given, second temperature value (TG2).

5. Method according to Claim 4, characterised in that after falling below the second temperature value (TG2), a fourth signal is produced, whereupon the diesel engine (1) is once more run in normal operation.

6. Method according to one of Claims 1 to 5, characterised in that one or more signals respectively actuate a display device (L1, L2), which facilitate tripping of the next step of the method even by hand.

**Revendications**

1. Procédé pour la combustion systématique des particules solides (suie) qui sont formées et rassemblées dans un filtre (12) à partir du courant de gaz d'échappement d'un moteur diesel à combuction interne, comme par exemple d'un moteur diesel d'un engin de travail, dans lequel un clapet d'étranglement (4) prévu dans le conduit d'aspiration (2) de l'air de combustion et dépendant entre autres de la contre-pression (PVF) mesurée dans le conduit d'échappement (11) avant le filtre (12) est actionné selon le système suivant, l'engin de travail étant à l'arrêt:

On compare la contre-pression (PVF) mesurée lors du fonctionnement à vide du moteur diesel (1) à une pression limite supérieure prédéterminée (PG1) (Etape 1).

Si la contre-pression (PVF) dépasse la pression limite supérieure (PG1), un premier signal (PVF > PG1) est engendré, sur quoi on fait fonctionner le moteur diesel dans la zone supérieure de charge partielle (Etape 2).

Pendant la poursuite du fonctionnement sous charge du moteur diesel, on mesure la température des gaz d'échappement après le filtre (TNF) et on la compare à une première valeur prédéterminée de la température (TG1) (Etape 3).

Si la température des gaz d'échappement (TNF) dépasse la première valeur de la température (TG1), un deuxième signal (TNF > TG1) est engendré, sur quoi le clapet d'étranglement est actionné dans le sens de l'étranglement (Etape 4).

Lors du fonctionnement du moteur diesel (1) qui continue à être maintenu dans la zone supérieure de charge partielle, on mesure à nouveau la contre-pression (PVF) et on la compare à une pression limite inférieure prédéterminée (PG2) (Etape 5).

Si la contre-pression (PVF) devient inférieure à la contre-pression inférieure (PG2), un troisième signal (PVF < PG2) est engendré, sur quoi le clapet d'étranglement (4) est ouvert à nouveau et le moteur diesel peut être déchargé (Etape 6).

2. Procédé selon la revendication 1, caractérisé par le fait que (en relation avec son étape 3), la température des gaz d'échappement est déterminée sous la forme de la différence entre la température des gaz d'échappement avant le filtre (TVF) et après le filtre (TNF), et qu'elle est comparée à une valeur de la température sous la forme d'une première différence de température prédéterminée (DT1) selon la relation:

$$(TVF - TNF) < DT1.$$

3. Procédé selon la revendication 2, caractérisé par le fait que (selon la revendication 1, étape 6), le troisième signal n'est engendré que sous la condition supplémentaire que la différence entre les températures des gaz d'échappement (TNF - TVF) soit inférieure à une deuxième différence de température prédéterminée (DT2).

4. Procédé selon l'une des revendications 1 à 3, caractérisé par le fait que (selon la revendication 1, étape 6), on fait encore fonctionner à pleins gaz le moteur diesel (1) déchargé jusqu'à ce que la température des gaz d'échappement après le filtre (TNF) tombe au-dessous d'une deuxième valeur prédéterminée de la température (TG2).

5. Procédé selon la revendication 4, caractérisé par le fait qu'après le dépassement vers le bas de la deuxième valeur de la température (TG2), un quatrième signal est engendré, sur quoi le moteur diesel (1) est remis en fonctionnement normal.

6. Procédé selon l'une des revendications 1 a 5 caractérisé par le fait qu'un ou·plusieurs signaux actionnent chacun un dispositif indicateur (L1, L2) et permettent, même à la main, le déclenchement de chaque étape suivante du procédé.

Fig.1

Luft →

Luftfilter — 3

6
4
2

1 — DIESEL MOTOR
Last

11

PVF
TVF — TNF

12

13

s
7 — n
8

9
10

P
T

Steuergerät — 5
PG1, PG2
TG1, TG2
DT1, DT2

L1 ⊗ — 14
L2 ⊗ — 15

Flußdiagramm

Fig. 2

START

Leerlauf
$n = n_0$ ; $S = 0$

 $P_{VF} > PG1$

$L_1$ an $\Rightarrow$ LAST,
VOLLGAS

$T_{VF} - T_{NF} < DT1$

$L_2$ an $\Rightarrow$ DROSSELN

$P_{VF} < PG2$

$T_{NF} - T_{VF} < DT2$

$L_2$ aus $\Rightarrow$ ENTDROSSELN
LASTLOS
VOLLGAS

$T_{NF} < TG2$

$L_1$ aus $\Rightarrow$ LEERLAUF

ENDE

Fig.3

(TVF) ] einstufig
(TNF)

STUFE I : MOTOR LAST
           VOLLGAS

STUFE II : MOTOR LAST
            VOLLGAS
            DROSSELN

Temp (°C)

Druck (mbar)

(TNF)

(TVF)

(TVF)

TNF

TG2

TVF

TNF-TVF < DT2

TG1

TVF-TNF < DT1

PVF

VOLLGAS, LASTLOS

PG2
PG1

LEERLAUF

STUFE I    STUFE II

25h      0        2        4        6      Zeit (min)

SIGNALE→ ①        ②               ③ ④

REGENERATION

0 196 421